**Europäisches Patentamt**

**European Patent Office**

**Office européen des brevets**

(19)

(11) Veröffentlichungsnummer: **0 085 127**
**B1**

(12) # EUROPÄISCHE PATENTSCHRIFT

(45) Veröffentlichungstag der Patentschrift:
**29.01.86**

(51) Int. Cl.⁴: **B 64 C 27/32**

(21) Anmeldenummer: **82100703.6**

(22) Anmeldetag: **02.02.82**

(54) **Rotor, insbesondere für ein Drehflügelflugzeug, mit einer Rotornabe aus Faserverbundwerkstoff.**

(43) Veröffentlichungstag der Anmeldung:
**10.08.83 Patentblatt 83/32**

(45) Bekanntmachung des Hinweises auf die Patenterteilung:
**29.01.86 Patentblatt 86/5**

(84) Benannte Vertragsstaaten:
**DE FR GB IT**

(56) Entgegenhaltungen:
**FR - A - 2 041 747**
**FR - A - 2 369 158**
**FR - A - 2 454 963**
**US - A - 4 156 583**
**US - A - 4 306 836**

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Hahn, Michael, Dipl.-Ing., Bahnhofstrasse 15b, D-8012 Ottobrunn (DE)**
Erfinder: **Gröber, Josef, Köglspergerweg 4, D-8000 München 70 (DE)**

EP 0 085 127 B1

## Beschreibung

Die Erfindung betrifft einen Rotor gemäss dem Oberbegriff des Patentanspruchs 1.

Ein derartiger Rotor z.B. gemäss der FR-A-2 041 747 lediglich mit metallischen Nabenbeschlagteilen hat im Vergleich zu Ausführungsformen mit einer ganz oder grösstenteils aus Metall bestehenden Rotornabe den Vorteil eines erheblich geringeren Gewichts ohne Minderung der Betriebszuverlässigkeit bzw. Belastbarkeit. Ein bei einem solchen Rotor im übrigen für die Rotornabe aus Gründen einer besonders einfachen und billigen Herstellung unter Verzicht auf einen metallischen Nabenbeschlag schon vorgeschlagener Aufbau aus zwei in koaxialer Anordnung auf einem Nabengrundkörper auf Distanz sitzenden FVW-Platten ist allerdings mit dem Nachteil von Klebestellen relativ geringer Flächenabmessung behaftet, d.h. ist nicht gänzlich frei von Festigkeitsproblemen.

Der Erfindung liegt daher bei einem Rotor der eingangs genannten Art die Aufgabe zugrunde, solche (kleinflächigen) festigkeitsmindernden Fügestellen der Rotornabe zu vermeiden, ohne auf metallische Nabenbeschlagteile zurückgreifen zu müssen.

Diese Aufgabe ist gemäss dem Kennzeichnen des Patentanspruchs 1 gelöst in der Erkenntnis, dass die in Blattschlagrichtung geforderte Biegesteifigkeit des einzelnen Rotornabenarmes nur durch einen Faserschichtaufbau seiner beiden Schenkel sichergestellt werden kann und dass eine Vereinigung solcher Schenkel mit der Rotornabe zu einem integralen Faseraufbau durch Anpassung des Nabengrundkörpers möglich ist, sofern hierfür die Form eines Rohres gewählt wird. Die Grundvoraussetzung für diese Anpassung ist die vorgeschlagene Aufspaltung der Faserlagen des rohrförmigen Nabengrundkörpers, aus Gründen der Fertigungsvereinfachung vorzugsweise in der im Unteranspruch 2 und 4 gekennzeichneten Weise.

Soweit die gleiche Dicke für beide Schenkel des einzelnen Rotornabenarmes gefordert ist, lässt sich die Dicke des aussenliegenden Schenkels in der im Unteranspruch 3 gekennzeichneten Weise leicht erhöhen.

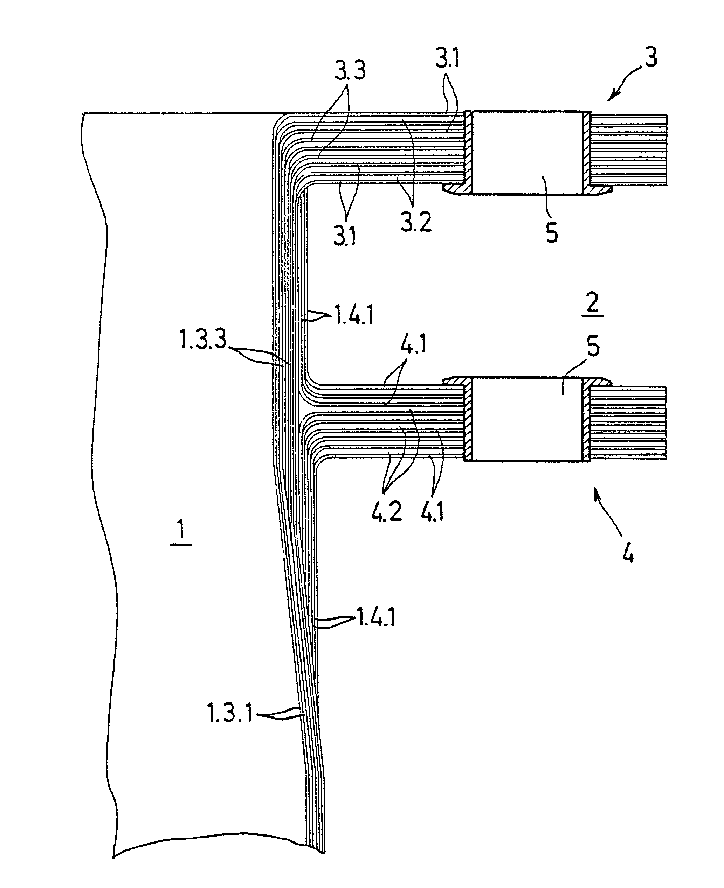

Die Erfindung wird im übrigen nachfolgend anhand eines Ausführungsbeispiels erläutert. Hierzu zeigt die Zeichnung von einem Rotor eines Drehflügelflugzeugs im Längsschnitt einen Abschnitt der Rotornabe mit einem Nabengrundkörper 1 in Form eines Rohres, an dem die einzelne Blatthalterung ein radial auswärts gerichteter, gabelartiger Rotornabenarm 2 ist; beide Schenkel 3, 4 desselben sind in üblicher Weise für nicht dargestellte Blattbefestigungsbolzen mit druckbelastbaren Buchsen 5 in Anschlussbohrungen versehen. Die Rotornabe besteht aus Faserverbundwerkstoff, beispielsweise Glasfasern in einer Kunstharzmatrix, wobei die Schenkel 3, 4 des einzelnen Rotornabenarmes 2 als (in Querrichtung zur Rotorebene) flache Schichtkörper ausgebildet sind mit beispielsweise von Faserlage 3.1 (3.3) bzw. 4.1 zu Faserlage 3.2 bzw. 4.2 wechselnder Faserorientierung. Es kann abwechselnd auf eine Faserlage 3.1 (3.3) bzw. 4.1 aus in Schenkellängsrichtung sich erstreckenden Fasersträngen unidirektionaler Faserorientierung eine schubübertragende Faserlage 3.2 bzw. 4.2 mit kreuzweiser Orientierung der Fasern (z.B. Fasergewebe oder -gelege) folgen. Ebenso kann aber such für jede einzelne Faserlage ein Schichtaufbau mit abwechselnder unidirektionaler und kreuzweiser Faserorientierung vorgesehen sein.

Entsprechend ist für den rohrförmigen Nabengrundkörper 1 auch ein Aufbau aus mehreren gleichartigen Faserlagen 1.3.1 (1.3.3), 1.4.1 vorgesehen. Zur Vereinigung der Schenkel 3, 4 mit dem Nabengrundkörper 1 zu einem fugenlosen Ganzen «Rotornabe» ist eine Aufspaltung dieser Faserlagen 1.3.1 (1.3.3), 1.4.1 in Schichtrichtung in voneinander getrennte Lagen und deren Fortsetzung als die Faserlagen 3.1 (3.3) bzw. 4.1 der Schenkel vorgesehen, wobei diese Aufspaltung erst mit der Änderung der Winkellage der Faserlagen 1.3.1 (1.3.3), 1.4.1 durch die Ausrichtung auf die jeweilige Schenkellage beginnt unter Zwischenfügung der übrigen Faserlagen 3.2 bzw. 4.2 der Schenkel 3 bzw. 4. Aus Gründen der fertigungstechnischen Vereinfachung setzen sich hierbei zweckmässig die über die ganze Grundkörperlänge verlaufenden Faserlagen 1.3.1 in den jeweils aussenliegenden Schenkel 3 fort, natürlich ebenso diejenigen Faserlagen 1.3.3, welche als dickenerhöhende Faserlagen 3.3 des Schenkels 3 im Nabengrundkörper 1 zwischen jenen daher (im Vereinigungsbereich desselben und des einzelnen Rotornabenarmes 2) zu zwei Gurten aufgeteilten Faserlagen 1.3.1 eingebettet sind. Dagegen erstrecken sich in den jeweils zugehörigen innenliegenden Schenkel 4 hinein als dessen Faserlagen 4.1 nur solche Faserlagen 1.4.1 des Nabengrundkörpers 1, welche diesen im genannten Vereinigungsbereich im Wege einer Wanddickenerhöhung verstärken. Sofern es zweckmässig ist, können sich in diesen Schenkel 4 hinein auch zuvor über die ganze Grundkörperlänge verlaufende Faserlagen fortsetzen.

Der beschriebene Rotornabenaufbau ist durch (Hand-)Laminieren, also durch «nass-in-nass»-Formgebungsarbeit und folglich frei von Verbindungsfugen herstellbar. Zusätzliche Feinschichten, Kantenversteifungen und dgl. qualitäts- und festigkeitserhöhende Massnahmen üblicher Art sind selbstverständlich nicht ausgeschlossen.

## Patentansprüche

1. Rotor, insbesondere für ein Drehflügelflugzeug, mit einer Rotornabe aus Faserverbundwerkstoff, an welcher Blatthalterungen jeweils in Form eines radial auswärts gerichteten, gabelartigen Rotornabenarmes (2) angeordnet sind, dessen beide Schenkel (3, 4) einen Schichtaufbau senkrecht zur Rotorebene aufweisen und mit einem Nabengrundkörper (1) vereinigt sind, dadurch gekennzeichnet, dass der Nabengrundkörper (1) ein Rohr ist aus mehreren Faserlagen (1.3.1, 1.3.3, 1.4.1) und dessen Vereinigung mit den Schenkeln (3, 4) durch eine Aufspaltung seiner Faserlagen in Schichtrichtung in voneinander getrennte Lagen (3.1, 3.3, 4.1) erfolgt, welche sich in die Schenkel (3, 4) unter Zwischenfügung von weiteren Faserlagen (3.2, 4.2) fortsetzen.

2. Rotor nach Anspruch 1, dadurch gekennzeichnet, dass zum einen in den jeweils aussenliegenden Schenkel (3) sich überwiegend zuvor über die ganze Länge des Nabengrundkörpers (1) verlaufende Faserlagen (1.3.1) fortsetzen, zum anderen dagegen in den zugehörigen innenliegenden Schenkel (4) überwiegend solche Faserlagen (1.4.1), die im Vereinigungsbereich der Schenkel mit dem Nabengrundkörper diesen im Wege einer Wanddickenerhöhung verstärken.

3. Rotor nach Anspruch 2, dadurch gekennzeichnet, dass die über die ganze Länge des Nabengrundkörpers (1) verlaufenden Faserlagen (1.3.1) im Vereinigungsbereich in zwei Gurte aufgeteilt und dass zwischen eingebettete weitere Faserlagen (1.3.3), zusätzlich in voneinander getrennte Lagen aufgespalten, sich unter Zwischenfügung von weiteren Faserlagen (3.2) in den aussenliegenden Schenkel (3) fortsetzen.

4. Rotor nach Anspruch 1 oder 3, gekennzeichnet durch eine Aufspaltung der Faserlagen (1.3.1, 1.3.3, 1.4.1) des Nabengrundkörpers (1) erst mit der Änderung ihrer Winkellage durch Ausrichtung auf die jeweilige Schenkellage.

5. Rotor nach den Ansprüchen 1 bis 4, gekennzeichnet durch mehrschichtige Faserlagen mit abwechselnd unidirektionaler und kreisweiser Faserorientierung.


## Claims

1. A rotor, more especially for a rotary-wing aircraft, comprising a rotor hub made of fibre composite material on which respective blade holders, each in the form of a fork-like rotor hub arm (2) directed radially outwardly, are arranged, the two limbs (3, 4) of which are united with a basic hub body (1), and have a layer structure perpendicular to the rotor plane, characterised in that the basic hub body (1) is a tube made from several fibre plies (1.3.1, 1.3.3, 1.4.1) and the uniting of same with the limbs (3, 4) is effected by splitting up its fibre plies in the layer direction into plies (3.1, 3.3, 4.1) which are separate from one another and which continue into the limbs (3, 4) along with the interpolation of further fibre plies (3.2, 4.2).

2. A rotor according to claim 1, characterised in that, on the one hand, fibre plies (1.3.1) which previously extended over substantially the entire length of the basic hub body (1) continue into the respective external limb (3), whilst on the other hand, fibre plies (1.4.1) which, in in the region of union of the limbs with the basic hub body, reinforce the latter by way of an increase in wall thickness continue into the associated internal limb (4).

3. A rotor according to claim 2, characterised in that the fibre plies (1.3.1) extending over the entire length of the basic hub body (1) are split up, in the region of union, into two straps and in that further fibre plies (1.3.3) embedded therebetween, which are additionally split up into plies separate from one another, continue, along with the interpolation of further fibre plies (3.2), into the external limb (3).

4. A rotor according to claim 1 or 3, characterised by splitting up of the fibre plies (1.3.1, 1.3.3, 1.4.1) of the basic hub body (1) only upon the changing of their angular position by alignment at the respective limb positions.

5. A rotor according to claims 1 to 4, characterised by multi-layer plies with alternately unidirectional and crosswise fibre orientation.


## Revendications

1. Rotor, notamment pour un aéronef à voilure tournante, comportant un moyeu en matériau composite renforcé par des fibres sur lequel sont agencées des attaches de pale, chacune sous la forme d'un bras (2) du moyeu, ce bras dirigé radialement vers l'extérieur étant en forme de fourche à deux branches (3, 4) qui présentent une structure stratifiée perpendiculairement au plan du rotor et sont réunies par un corps de base (1) du moyeu, caractérisé en ce que ce corps de base (1) du moyeu est un tube ayant plusieurs couches de fibres (1.3.1, 1.3.3, 1.4.1), la réunion de ce tube aux branches (3, 4) s'effectuant par une subdivision de ses couches de fibres, dans la direction des strates, en couches (3.1, 3.3, 4.1) qui sont séparées les unes des autres et se prolongent dans les branches (3, 4) en étant intercalées avec d'autres couches de fibres (3.2, 4.2).

2. Rotor selon la revendication 1, caractérisé, en ce que, d'une part, dans chaque branche (3) située du côté extérieur, le prolongement de couches de fibres comporte, de manière prédominante, des couches (1.3.1) s'étendant d'abord sur toute la longueur du corps de base du moyeu (1), tandis que, d'autre part, dans la branche conjuguée (4) située du côté intérieur, le prolongement de couches de fibres comporte par contre, de manière prédominante, des couches de fibres (1.4.1) qui renforcent le corps de base du moyeu par accroissement de son épaisseur dans la région où les branches se réunissent à ce corps de base.

3. Rotor selon la revendication 2, caractérisé en ce que les couches de fibres (1.3.1) s'étendant sur toute la longueur du corps de base (1) du moyeu sont partagées en deux faisceaux dans la région de la réunion, et en ce que d'autres couches de fibres (1.3.3) en condition d'interposition avec ceux-ci sont en outre subdivisées en couches séparées les unes des autres et se prolongent dans la branche (3) située du côté extérieur en étant intercalées avec des couches de fibres supplémentaires (3.2).

4. Rotor selon la revendication 1 ou 3, caractérisé par une subdivision des couches de fibres (1.3.1, 1.3.3, 1.4.1) du corps de base (1) du moyeu n'ayant lieu qu'avec leur changement de position angulaire inhérent à leur orientation dans la direction de la couche de branche concernée.

5. Rotor selon les revendications 1 à 4, caractérisé par des couches de fibres en plusieurs strates avec orientation de fibres alternativement unidirectionnelle et croisée.